(19) Europäisches Patentamt
European Patent Office
Office européen des brevets

(11) Veröffentlichungsnummer: **0 223 050**
**A2**

(12) **EUROPÄISCHE PATENTANMELDUNG**

(21) Anmeldenummer: 86114060.6

(22) Anmeldetag: 10.10.86

(51) Int. Cl.⁴: **C01G 49/00** , C09C 1/22 , H01F 1/10 , G11B 5/706

(30) Priorität: 23.10.85 DE 3537624

(43) Veröffentlichungstag der Anmeldung:
27.05.87 Patentblatt 87/22

(84) Benannte Vertragsstaaten:
DE FR GB IT NL

(71) Anmelder: **BAYER AG**
**Konzernverwaltung RP Patentabteilung**
**D-5090 Leverkusen 1 Bayerwerk(DE)**

(72) Erfinder: **Meisen, Ulrich, Dr.**
**Breslauer Strasse 31**
**D-4150 Krefeld 11(DE)**
Erfinder: **Buxbaum, Gunter, Dr.**
**Holzapfelweg 2**
**D-4150 Krefeld 1(DE)**

(54) **Feinteilige isometrische Hexaferritpigmente, Verfahren zu ihrer Herstellung und deren Verwendung.**

(57) Die vorliegende Erfindung betrifft feinteilige magnetische Hexaferritpigmente der allgemeinen Zusammensetzung

$M_x(I) M_y(II) M_z(III) Fe_{12-(y+z)}O_{19}$, wobei

$0 \leq x \leq 1,2$, $0 \leq (y+z) \leq 2$ und $x+y+z \geq 1$ ist und

M(I) = Ca, Sr, Ba, Pb, Eu oder eine Kombination von RE und einwertigen Kationen der Gruppe Na, K, Rb, Cs, Tl, Ag, wobei RE dreiwertige Kationen des La, Y oder anderer Seltenerdenmetalle sind, und

M(II) = Fe(II), Mn, Co, Ni, Cu, Zn, Cd, Mg und

M(III) = Ti, Zr, Hf, Ca, Sn, Ge, In, Nb, Ta, V, Sb, As, Bi, Al, Cr(III) bedeuten, Verfahren zur Herstellung dieser Hexaferritpigmente sowie deren Verwendung in magnetischen Aufzeichnungsträgern.

EP 0 223 050 A2

## Feinteilige isometrische Hexaferritpigmente, Verfahren zu ihrer Herstellung und deren Verwendung

Die vorliegende Erfindung betrifft feinteilige magnetische Hexaferritpigmente der allgemeinen Zusammensetzung

$M_x(I) M_y(II) M_z(III) Fe_{12-(y+z)}O_{19}$, wobei

$0 \leq x \leq 1,2$, $0 \leq (y+z) \leq 2$ und $x+y+z \geq 1$ ist und

M(I) = Ca, Sr, Ba, Pb, Eu oder eine Kombination von RE und einwertigen Kationen der Gruppe Na, K, Rb, Cs, Tl, Ag, wobei RE dreiwertige Kationen des La, Y oder anderer Seltenerdenmetalle sind, und

M(II) = Fe(II), Mn, Co, Ni, Cu, Zn, Cd, Mg und

M(III) = Ti, Zr, Hf, Ga, Sn, Ge, In, Nb, Ta, V, Sb, As, Bi, Al, Cr(III) bedeuten, Verfahren zur Herstellung dieser Hexaferritpigmente sowie deren Verwendung in magnetischen Aufzeichnungsträgern.

In magnetischen Aufzeichnungsmedien werden als magnetische Materialien überwiegend solche eingesetzt, deren magnetische Orientierung in Längsrichtung des Magnetbandes liegt. Derzeit werden jedoch auch Aufzeichnungsverfahren entwickelt, bei denen die magnetisch leichte Achse senkrecht zur Bandebene liegt. Für diese Aufzeichnungsverfahren wird plättchenförmiges magnetisches Material verwendet, d.h., das Verhältnis Durchmesser/Dicke beträgt vorzugsweise 0,05 -0,5.

Aufgrund ihrer besonders guten chemischen und thermischen Beständigkeit wurden für diesen Zweck auch hexagonale magnetische Bariumferrite vorgeschlagen (DE-A 3 342 682). Hexagonale magnetische Ferrite haben die allgemeine Formel $MFe_{12}O_{19}$.

Geringe Abweichungen von der Stöchiometrie, d.h. ein kleiner Bariumüberschuß ergibt die äquivalente Menge an Fe(II) statt Fe(III), so daß die Elektroneutralität gewahrt wird. Dotierter Bariumferrit hat die folgende Formel:

$M_x(I) M_y(II) M_z(III) Fe_{12-(y+z)}O_{19}$, wobei

M(I) = Ca, Sr, Ba, Pb, Eu oder eine Kombination von RE und einwertigen Kationen der Gruppe Na, K, Rb, Cs, Tl, Ag, wobei RE dreiwertige Kationen des La, Y oder anderer Seltenerdenmetalle sind, und

M(II) = Fe(II), Mn, Co, Ni, Cu, Zn, Cd, Mg und

M(III) = Ti, Zr, Hf, Ga, Sn, Ge, In, Nb, Ta, V, Sb, As, Bi, Al, Cr(III) bedeuten.

Hexagonale Ferrite, die nach dem klassischen Verfahren durch Glühen entsprechender Mischungen aus Oxiden und/oder Carbonaten erhalten werden, sind wegen ihrer Teilchenform und -größe für die magnetische Aufzeichnung nicht geeignet. Voraussetzung für die Eignung als magnetische Aufzeichnungsmaterialien ist eine Feinteiligkeit der Pigmente mit Durchmessers zwischen 1 µm und 0,05 µm und eine enge Teilchengrößenverteilung.

Die bekannten Verfahren zur Herstellung feinteiliger Hexaferrite zur Signalspeicherung führen zu Teilchen mit anisometrischer, speziell plättchenähnlicher Form, wobei der Durchmesser üblicherweise mindestens das Doppelte der Dicke betragen sollte und günstige Werte bei deutlich größeren Verhältnissen erwartet wurden.

So ist es aus der DE-A 3 132 677 bekannt, eine Mischfällung von Hydroxiden, Carbonaten und Oxalaten oder anderer schwerlöslicher Metallsalze vorzunehmen. Der Nachteil der dabei erhaltenen Produkte liegt in ihrer mangelnden Homogenität. Auch hydrothermale Verfahren (DE-A 2 003 438) werden zur Herstellung hexagonaler Ferrite vorgeschlagen, jedoch konnten bisher nur zu grobe Teilchen hergestellt werden. Mit Hilfe des Sprühröstverfahrens (EP-A 0 011 265) können hexagonale Ferrite für die Herstellung von Permanentmagneten erhalten werden. Diese Ferrite sind jedoch ebenfalls zu grob und deshalb nicht für den Einsatz als magnetische Aufzeichnungsmaterialien geeignet. Produkte, die aus verschiedensten Salzschmelzen gewonnen wurden, zeichnen sich durch schlechte Dispergierbarkeit und ausgeprägte Plättchenform aus. Salzschmelzverfahren konnten sich außerdem wegen der Korrosionsprobleme bisher technisch nicht durchsetzen. Die Zersetzung von Salzen langkettiger Carbonsäuren, Alkoxiden und Acetylacetonaten (2,4-Pentadionate) (US-A 3 634 254) führen zu unregelmäßig geformten feinteiligen Materialien. Ein weiteres Verfahren zur Herstellung von hexagonalen Ferriten als magnetische Aufzeichnungsmaterialien geht von Metallborosilicatschmelzen aus (US-A 3 716 630 und US-A 4 493 874). Das Problem genügend standfester Tiegelmaterialien und die Notwendigkeit hoher Schmelztemperaturen und langer Glüh-und Temperzeiten konnten noch nicht gelöst werden. Darüber hinaus flocken die derart hergestellten Teilchen aufgrund ihrer ausgeprägten Plättchenform leicht bei der Herstellung des Magnetbandes.

Bei den nach den beschriebenen plättchenförmigen hexagonalen Ferriten steht die magnetisch leichte Richtung senkrecht zur Plättchenebene. Somit ist bei Senkrechtaufzeichnungdie maximale Speicherdichte durch den Plättchendurchmesser begrenzt. Zusätzlich wird bei üblichen Herstellverfahren von magnetischen Speichermedien aufgrund des rheologischen Verhaltens von Dispersionen plättchenförmiger Pigmente nur eine mäßige Ausrichtung in der magnetischen Vorzugsrichtung erreicht.

Das Ziel der vorliegenden Erfindung ist es, für die magnetische Aufzeichnung geeignete hexagonale Ferrite zur Verfügung zu stellen, die gegenüber den aus dem Stand der Technik bekannten in ihren Eigenschaften überlegen sind und in wirtschaftlicher Weise erhalten werden können. Diese Anforderungen erfüllen in besonders hohem Maß feinteilige magnetische Hexaferritpigmente der allgemeinen Zusammensetzung

$M_x(I) M_y(II) M_z(III) Fe_{12-(y+z)}O_{19}$, wobei

$0 \leq x \leq 1,2, 0 \leq (y+z) \leq 2$ und $x+y+z \geq 1$ ist und

M(I) = Ca, Sr, Ba, Pb, Eu oder eine Kombination von RE und einwertigen Kationen der Gruppe Na, K, Rb, Cs, Tl, Ag, wobei RE dreiwertige Kationen des La, Y oder anderer Seltenerdenmetalle sind, und

M(II) = Fe(II), Mn, Co, Ni, Cu, Zn, Cd, Mg und

M(III) = Ti, Zr, Hf, Ga, Sn, Ge, In, Nb, Ta, V, Sb, As, Bi, Al, Cr(III) bedeuten, wobei die Hexaferritpigmente in allen Raumrichtungen nahezu gleiche Abmessungen besitzen, also isometrisch sind.

Diese erfindungsgemäßen Hexaferritpigmente zeichnen sich durch eine hohe Packbarkeit im Trägermaterial und durch die Möglichkeit aus, in jeder gewünschten Raumrichtung magnetisch ausrichtbar zu sein. Sie eignen sich somit hervorragend zum Einsatz in isotropen und senkrecht-magnetischen Aufzeichnungsverfahren. Bei den erfindungsgemäßen Pigmenten ist die Deskrepanz zwischen Form-und Kristallanisotropie aufgehoben, da die Formanisotropie verschwindet.

Derartige gut kristallisierte feinteilige Hexaferrite sind bislang nicht bekannt.

Besonders bevorzugt sind solche Hexaferritpigmente, deren Verhältnis des Durchmessers zur Dicke der Teilchen zwischen 0,6 und 1,5, besonders bevorzugt zwischen 0,8 und 1,3, beträgt. Die Kristallgröße liegt im für Magnetpigmente üblichen Bereich.

Gegenstand der vorliegenden Erfindung ist auch ein Verfahren zur Herstellung der erfindungsgemäßen feinteiligen magnetischen Hexaferritpigmente durch Zersetzung von entsprechenden Metallsalzen organischer Verbindungen in Gegenwart oberflächenaktiver Substanzen bei erhöhter Temperatur unter oxidierenden Bedingungen, wobei die Metallsalze komplexe Verbindungen von α-Hydroxycarbonsäuren mit den entsprechenden Metallionen und gegebenenfalls Ammoniumionen sind.

Eine besonders bevorzugte Ausführungsform des erfindungsgemäßen Verfahrens besteht darin, daß als Metallsalze solche der Zusammensetzung $NH_4[Me_nAn_m] \times p H_2O$ eingesetzt werden, wobei An das Anion einer α-Hydroxycarbonsäure und Me die durch die gewünschte Zusammensetzung des Hexaferritpigmentes vorgegebenen Metallionen sind. Besonders bevorzugt wird als α-Hydroxycarbonsäure die Zitronensäure eingesetzt. Es hat sich als vorteilhaft erwiesen, den pH-Wert auf einen gemäßigt sauren Bereich (0,5 -6,0) einzustellen. Da einige gemischte komplexe Citrate zweiwertiger Kationen nur im pH-Bereich von 8 bis 10 gut löslich sind, wird jedoch zum Beispiel bei der Herstellung Ca, Zn, Mn, Mg-dotierter Hexaferrite dieser pH-Bereich bevorzugt.

Besonders günstig ist die Ausführungsform des erfindungsgemäßen Verfahrens, bei dem die Metallsalze der organischen Verbindungen in Gegenwart der oberflächenaktiven Substanzen auf 80 bis 180°C zur Bildung einer glasartigen Vorläuferverbindung umgesetzt und diese anschließend auf die in den thermischen Existenzbereich der entsprechenden Hexaferritpigmente entsprechende Temperatur erhitzt werden.

Gegebenenfalls kann sich eine Behandlung der Reaktionsprodukts mit einer Säure, vorzugsweise der Essigsäure als günstig erweisen, was in einer Erhöhung der Sättigungsmagnetisierung seinen Ausdruck findet. Der Vorteil des erfindungsgemäßen Verfahrens besteht darin, daß die Lösung der Salze der α-Hydroxycarbonsäuren absolut homogen auf atomarem Niveau ist, so daß man ein extrem homogenes Produkt erhält.

Zur Herstellung der erfindungsgemäßen Hexaferritpigmente geht man zweckmäßigerweise von den wäßrigen Lösungen der Metallsalze der α-Hydroxycarbonsäuren aus. Die Lösungen können aus festen Salzen der α-Hydroxycarbonsäuren oder aus Oxiden, Hydroxiden oder Carbonaten oder aus anderen Verbindungen der entsprechenden Metalle, die von der eingesetzten α-Hydroxycarbonsäuren gelöst werden, hergestellt werden. Die Temperaturen zur Herstellung dieser Lösung betragen 20 -90°C. Die Konzentrationen der Salze können in den wäßrigen Lösungen zwischen 1 und 50 Gew.-% liegen.

Als α-Hydroxycarbonsäuren können eingesetzt werden: Zitronensäure, Glykolsäure, Weinsäure, Milchsäure, Äpfelsäure und andere α-Hydroxycarbonsäuren. Bis zu 50 % der α-Hydroxycarbonsäuren können durch andere Carbonsäure, wie Essigsäure und Ameisensäure ersetzt werden.

Der Zusatz eines Netzwerkbildners verbessert die Eigenschaften des Produkts entscheidend. Als oberflächenaktive Substanzen kommen in Frage: Alkohole, Diole, Triole und Polyole sowie polymere Alkohole, wie Polyvinylalkohol, Fettsäuren, deren Salze, Ester und Amide, Polyether, Amine mit einer und mehreren Aminofunktionen, Polyamine und Polyamide, ungesättigte Carbonsäuren und deren Ester, Amide, Anhydride, polymere ungesättigte Carbonsäuren, Lactone, Ketone, Ketale, Acetale und Aldehyde mit mehreren funktionellen Gruppen, vorzugsweise 1-5, quaternäre Ammoniumsalze.

3

Ebenso können Si-organische Verbindungen wie Siliconöle, -harze oder -Ester oder Phosphor-organische Verbindungen wie Phosphorsäureester oder Phosphonosäuren diese Funktion übernehmen.

Anstelle der Kombination einer $\alpha$-Hydroxycarbonsäure und einer oberflächenaktiven Substanz können auch teilweise veresterte $\alpha$-Hydroxycarbonsäuren, wobei als Alkohole die obengenannten Alkohole geeignet sind, oder teilweise amidierte $\alpha$-Hydroxycarbonsäuren, wobei als Amine die obengenannten Amine geeignet sind, eingesetzt werden.

Das Eindampfen der wäßrigen Lösungen kann durch konventionelle Techniken wie Eindampfen, Gefriertrocknen, Sprüh trocknen oder Destillation geschehen. Die hierbei entstehende glasartige Vorläuferverbindung läßt sich leicht in konventionellen Mühlen mahlen. Bei der Pyrolyse der gemahlenen glasartigen Vorläuferverbindung bei Temperaturen zwischen 160 und 1000°C entsteht direkt ein feinteiliger hexagonaler Ferrit. Die Pyrolyse wird in Gegenwart von molekularem Sauerstoff in Kammeröfen, Wirbelschichtöfen oder Drehrohröfen durchgeführt, wobei vorzugsweise letztere Ofentypen eingesetzt werden.

Naturgemäß sollte die Behandlung mit einer Säure, die den hexagonalen Ferrit nicht löst, erfolgen, Vorzugsweise wird 10 %ige Essigsäure 1 min bis 6 h, bevorzugt 20 min - 1 h, auf das pyrolysierte Produkt einwirken lassen. Die Säure wird hierbei auf Temperaturen zwischen 20 und 100°C erhitzt.

Die besondeen Vorteile des erfindungsgemäßen Verfahrens liegen in dessen enormer Flexibilität, so daß eine Vielzahl verschiedenster hexagonaler Ferrite hergestellt werden können. Weiterhin kann von reinen Ausgangsmaterialien ausgegangen werden, so daß man zu hochreinen Produkten exakter Stöchiometrie gelangt.

Aufgrund ihrer hervorragender Eigenschaften sind die erfindungsgemäßen feinteiligen magnetischen Hexaferritpigmente besonders geeignet für den Einsatz in magnetischen Aufzeichnungsmedien. Gegenstand dieser Erfindung ist somit auch die Verwendung dieser Hexaferritpigmente in magnetischen Aufzeichnungsträgern.

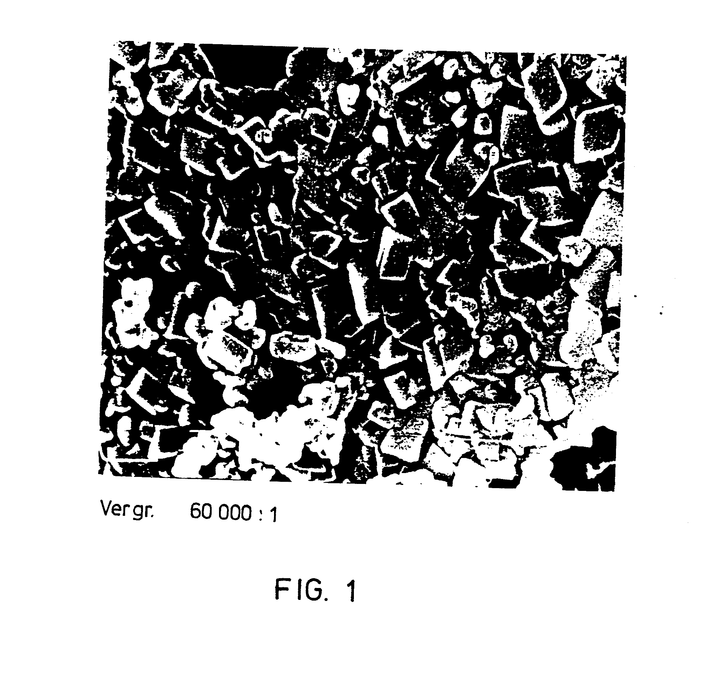

Fig. 1 ist eine Raster-Elektronen-Mikroskop-Aufnahme der erfindungsgemäßen Pigmente.

Die folgenden Beispiele sollen die Erfindung verdeutlichen, ohne sie jedoch einzuschränken, insbesondere wird der Fachmann durch Variation der Menge und der Art der Metallionen im Rahmen dieser Erfindung die gewünschten Zusammensetzungen mühelos erhalten können.

Beispiel 1

Herstellung eines feinteiligen isometrischen Bariumferritpigments ($BaFe_{12}O_{19}$)

3825 g Eisen-(III)-citratlösung (24,1 g Fe/kg) und 548 g Bariumcitratlösung (34,5 g Ba/kg) werden gemischt und unter Rühren auf 85°C aufgeheizt. Es entsteht eine rotbraune durchsichtige Lösung. Dann gibt man 437 g Ethandiol zu und rührt noch 15 min bei 85°C. Diese Lösung wird am Rotationsverdampfer so lange eingeengt, bis eine gerade noch fließfähige Lösung entsteht. Diese Lösung wird bei 250°C im Umlufttrockenschrank getrocknet und in einer Schlagrotormühle gemahlen. Diese glasartige Vorläuferverbindung wird dann nach folgendem Temperaturprogramm in einer Drehbirne weiter behandelt:

30 min auf 450°C aufheizen 50 l Luft/h
2 h bei 450°C halten 50 l Luft/h
60 min auf 830°C aufheizen 50 l Luft/h
60 min auf bei 830°C halten 50 l Luft/h

Die Produkte wurden durch Röntgenstrukturanalyse identifiziert. Die mittlere Kristallitgröße wurde ebenfalls röntgenographisch bestimmt. Sättigungsmagnetisierung und Koerzitivkraft wurden immer bei 1200 $KAm^{-1}$ Meßfeldstärke bestimmt.

Das entstandene Produkt wurde röntgenographisch als Bariumhexaferrit der Magnetoplumbitstruktur identifiziert. Es wies folgende Eigenschaften auf:

Kristallitgröße (röntgenographisch): 0,07 $\mu$m
spez. Oberfläche (BET-Methode): 13,8 m²/g
spez. Sättigungsmagnetisierung $B_s/\rho$ (nT m³/g): 72,7
Koerzitivkraft IHc (KA m$^{-1}$): 435,4
Durchmesser ($\varnothing$)/Dicke (D): 1,2 -1,4
(aus rasterelektronenmikroskopischen Aufnahmen)

Beispiel 2

Herstellung eines feinteiligen Bariumhexaferritpigments ($Ba_{1,1}Co_{0,8}Ti_{0,8}Fe_{10,4}O_{19}$)

437,1 g Eisen-(III)-citratlösung (2,89 Gew.-% Fe) werden unter rühren mit 4,775 g $BaCO_3$ (chemisch rein) versetzt. Nach 1 min werden 2,277 g basisches Cobaltcarbonat (45 Gew.-% Co) zugegeben. Dann werden 6,30 g Tetrabutyltitanat zugegeben. Anschließend werden 79,12 g Ethandiol zugegeben und auf 80°C erwärmt. Diese Lösung wird 2 h bei dieser Temperatur gerührt, wobei der pH-Wert 2,10 beträgt. Diese Lösung wird am Rotavapor eingeengt und bei 160°C im Umlufttrockenschrank getrocknet. Der glasartige Vorläufer wird nach folgendem Temperaturprogramm in einer Drehbirne pyrolysiert.

| t (h) | T (°C) | 1 Luft/h | 1 $N_2$/h |
|-------|--------|----------|-----------|
| 1 | 160 | 5 | 45 |
| 1 | 200 | 5 | 45 |
| 1 | 300 | 5 | 45 |
| 1 | 350 | 10 | 40 |
| 3 | 400 | 20 | 30 |
| 3 | 500 | 40 | 10 |
| 1 | 500 | 50 | – |
| 1 | 830 | 50 | – |

Das entstehende Produkt wurde röntgenographisch als Bariumhexaferrit mit Magnetoplumbitstruktur identifiziert und wies folgende Eigenschaften auf:
Kristallitgröße (röntgenographisch): 0,08 μm
spez. Oberfläche (BET-Methode): 28m²/g
spez. Sättigungsmagnetisierung $B_s/\rho$ (nTm³/g): 54,7
Koerzitivkraft IHc (KA m⁻¹): 109

Beispiel 3

Herstellung eines feinteiligen Bariumhexaferritpigments ($Ba_{1,1}Ti_{0,8}Co_{0,8}Fe_{10,4}O_{19}$) aus Ammoniumeisen-(III)-citrat

1494 g Ammoniumeisen-(III)-citratlösung (3,78 Gew.-% Fe) wird unter Rühren auf 70°C erwärmt. Danach werden 21,32 g $BaCO_3$, 10,20 g basisches Cobaltcarbonat (45 Gew.-% Co), 26,55 g Tetrabutyltitanat, 145,01 g Ethandiol und 87,77 g Zitronensäure zugegeben. Der pH-Wert der Lösung betrug 4,67. Diese Lösung wird wie in Beispiel 2 angegeben weiterbehandelt.
Das entstehende Produkt (Bariumhexaferrit, M-Struktur) wies folgende Eigenschaften auf:
Kristallitgröße (röntgenographisch): 0,06 μm
spez. Oberfläche (BET-Methode): 14,5 m²/g
spez. Sättigungsmagnetisierung $B_s/\rho$ (nT m³/g): 65,8
Koerzitivkraft IHc (KA m⁻¹): 90,2

## Beispiel 4

Herstellung von feinteiligem Bariumhexaferrit Vergleichsbeispiel zu 3

Ein feinteiliger Bariumhexaferrit wurde wie im Beispiel 3 angegeben hergestellt. Dieser wurde 15 min mit 10 %iger Essigsäure behandelt und wies nach dieser Behandlung folgende Eigenschaften auf:
Kristallitgröße (röntgenographisch): 0,06 $\mu$m
spez. Oberfläche (BET-Methode): 15,8 $m^2$/g
spez. Sättigungsmagnetisierung $B_s/\rho$ (nT $m^3$/g): 67,6
Koerzitivkraft IHc (KA $m^{-1}$): 90,5

## Beispiel 5

Herstellung von feinteiligem Bariumhexaferrit ($Ba_{0,7}Zn_{1,4}Fe_{11,2}O_{19}$)

1655 g Eisen-(III)-citratlösung (1,09 Gew.-% Fe), 65,24 g Bariumcitratlösung (4,25 Gew.-% Ba) und 27,73 g Ammoniumzinkcitratlösung (9,52 Gew.-% Zn) werden gemischt und auf 80°C erhitzt. Der pH-Wert wird auf 8,50 eingestellt und 174,8 g Ethandiol werden unter Rühren zugegeben. Diese Lösung wird wie im Beispiel 3 angegeben getrocknet und pyrolysiert. Dieses Produkt wurde 6 min in einem Kammerofen bei 1300°C geglüht und wies folgende Eigenschaften auf:
spez. Oberfläche (BET-Methode): 26 $m^2$/g
spez. Sättigungsmagnetisierung $B_s/\rho$ (nT $m^3$/g): 77,1
Koerzitivkraft IHc (KA $m^{-1}$): 7,7

## Beispiel 6

Herstellung von feinteiligem Bariumferrit ($Ba_{1,1}Co_{0,8}Ti_{0,8}Fe_{10,4}O_{19}$)

1169,2 g Eisen-tartratlösung (2,51 % Fe) wird auf 80°C aufgeheizt, 11,09 g $BaCo_3$, 5,21 g $CoCO_3$ (45 % CO) und 74,0 g TiO-Citrat (2,63 % Ti) werden unter Rühren zugegeben. Danach wird 42,9 g Ethylenglykol zugegeben und 1 h bei 80°C gerührt. Die Lösung wird an einem Rotationsverdampfer eingeengt und 20 h bei 160°C in einem Umlufttrockenschrank getrocknet. Dieses Produkt wird nun 1 h bei 825°C in einer Drehbirne geglüht.
Es entstand ein Bariumhexaferrit (M-Struktur) mit folgenden Eigenschaften:
spez. Oberfläche: 9,6 $m^2$/g
spez. Sättigungsmagnetisierung: $B_s/\rho$: 64,9 nT $m^3$/g
Koerzitivkraft: IHc (KA $m^{-1}$): 130,2

## Beispiel 7

Herstellung von feinteiligem Bariumferrit ($Ba_{1,1}Co_{0,8}Ti_{0,8}Fe_{10,4}O_{19}$)

11,5 kg Fe-Citratlösung (6,06 % Fe) wird auf 80°C aufgeheizt und mit 262 g $BaCo_3$, 125 g $CoCO_3$ (45 % CO) und 590 g TiO-Citratlösung (7,8 % Ti) und 758 g Ethylenglykol versetzt. Diese Lösung wird 1 h bei 80°C gerührt. Die Lösung wird an einem Rotationsverdampfer eingeengt und 21 h in einem Umlufttrockenschrank bei 160°C unter Luft getrocknet und pyrolisiert. Dieses Produkt wird nun 30 Min. bei 780°C in einer Drehbirne geglüht.
Es entstand ein Bariumferrit (M-Struktur) mit folgenden Eigenschaften:
spez. Oberfläche: 13,7 $m^2$/g
spez. Sättigungsmagnetisierung: $B_s/\rho$: 77,1 nT $m^3$/g
Koerzitivkraft: IHc (KA $m^{-1}$): 11,58
Teilchendurchmesser/Dicke: 0,9 -1,0
(aus rasterelektronenmikroskopischen Aufnahmen)

**Ansprüche**

1. Feinteilige magnetische Hexaferritpigmente der allgemeinen Zusammensetzung $M_x(I) \, M_y(II) \, M_z(III) \, Fe_{12-(y+z)}O_{19}$, wobei

$0 \leq x \leq 1,2$, $0 \leq (y+z) \leq 2$ und $x+y+z \geq 1$ ist und

M(I) = Ca, Sr. Ba, Pb, Eu oder eine Kombination von RE und einwertigen Kationen der Gruppe Na, K, Rb, Cs, Tl, Ag, wobei RE dreiwertige Kationen des La, Y oder anderer Seltenerdenmetalle sind, und

M(II) = Fe(II), Mn, Co, Ni, Cu, Zn, Cd, Mg und

M(III) = Ti, Zr, Hf, Ga, Sn, Ge, In, Nb, Ta, V, Sb, As, Bi, Al, Cr(III) bedeuten,

dadurch gekennzeichnet, daß die Hexaferritpigmente in allen Raumrichtungen nahezu gleiche Abmessungen besitzen.

2. Feinteilige magnetische Hexaferritpigmente gemäß Anspruch 1, dadurch gekennzeichnet, daß das Verhältnis des Durchmessers zur Dicke der Teilchen zwischen 0,6 und 1,5, besonders bevorzugt zwischen 0,8 und 1,3 beträgt.

Besonders bevorzugt wird ein Durchmesser zu Dickeverhältnis zwischen 0,8 und 1,3.

3. Verfahren zur Herstellung feinteiliger magnetischer Hexaferritpigmente gemäß einem der Ansprüche 1 oder 2 durch Zersetzung von entsprechenden Metallsalzen organischer Verbindungen in Gegenwart oberflächenaktiver Substanzen bei erhöhter Temperatur unter oxidierenden Bedingungen, dadurch gekennzeichnet, daß die Metallsalze komplexe Verbindungen von α-Hydroxycarbonsäuren mit den entsprechenden Metallionen ung gegebenenfalls Ammoniumionen sind.

4. Verfahren gemäß Anspruch 3, dadurch gekennzeichnet, daß als Metallsalze solche der Zusammensetzung $NH_4[Me_nAn_m] \times p \, H_2O$ eingesetzt werden, wobei An das Anion einer α-Hydroxycarbonsäure und Me die durch die gewünschte Zusammensetzung des Hexaferritpigmentes vorgegebenen Metallionen sind und n = 0,21-0,5 (für Me = Fe), m = 0,27-0,43 (für An = $C_6H_4O_7$), p = 0,04-1,5 ist.

5. Verfahren gemäß einem der Ansprüche 3 oder 4, dadurch gekennzeichnet, daß die α-Hydroxycarbonsäure Zitronensäure ist.

6. Verfahren gemäß einem oder mehrerer der Ansprüche 3 bis 5, dadurch gekennzeichnet, daß die Metallsalze der organischen Verbindungen in Gegenwart der oberflächenaktiven Substanzen auf 80 bis 180°C zur Bildung einer glasartigen Vorläuferverbindung umgesetzt und diese anschließend auf die in den thermischen Existenzbereich der entsprechenden Hexaferritpigmente entsprechende Temperatur erhitzt werden.

7. Verfahren gemäß Anspruch 6, dadurch gekennzeichnet, daß das Reaktionsprodukt mit einer Säure, bevorzugt Essigsäure, behandelt wird.

8. Verwendung der magnetischen Hexaferritpigmente gemäß einem oder mehrerer der Ansprüche 1 bis 7 in magnetischen Aufzeichnungsträgern.

Ver gr.    60 000 : 1

FIG. 1

Le A   23 894